# EUROPEAN PATENT SPECIFICATION

(11) **EP 3 636 561 B1**
(45) Date of publication and mention of the grant of the patent: **03.05.2023**
(21) Application number: 19201249.0
(22) Date of filing: 03.10.2019
(51) Int. Cl.: B65F 1/00, B65F 1/14

(54) **DEVICE FOR SEPARATE COLLECTION OF WASTE**
VORRICHTUNG FÜR DAS GETRENNTE SAMMELN VON ABFALL
DISPOSITIF DE COLLECTE SÉPARÉE DE DÉCHETS

(30) Priority: 04.10.2018 IT 201800009162
(43) Date of publication of application: 15.04.2020
(73) Proprietor: ID&A S.r.l., 25125 Brescia BS (IT)
(72) Inventor: BRAGADINA, Giovanni, 25060 COLLEBEATO (BRESCIA) (IT)
(74) Representative: Tansini, Elio Fabrizio

(56) References cited:
- WO-A1-2012/015664
- CN-B- 104 495 139
- US-A- 1 281 587

## Description

The present invention concerns a device for separate collection of waste.

For the purposes of the separate collection of waste, it is known to provide for so-called collection centers, also called "reuse and recycling centers" or "ecological waste depots", normally consisting of enclosed areas dedicated to the separate collection of waste in open-topped containers.

Due to the substantial environmental impact caused by them, these collection centers must be built a certain distance from residential areas and far from parks or areas of natural beauty.

Therefore, collection centers tend to be provided in peripheral areas of little natural beauty and with low population density, often at places that are difficult for the user to reach, with consequent disincentives for citizens to use them.

One of the greatest problems linked to the installation and management of waste collection plants is indeed represented by their high environmental impact, since it is difficult to integrate them in an acceptable manner into the urban or countryside area in which it is wished to install them.

Numerous waste collection apparatuses have been proposed that are devised to also be installed in urban areas, in order to allow the separate collection of waste while avoiding as much as possible high environmental impact.

The need to make large collection centers to collect large amounts of waste also comes up against the trend to keep the size and bulk thereof as low as possible in order to limit their environmental impact. In the search for solutions aimed at limiting environmental impact and at ensuring an adequate collection capacity, collection systems have also been proposed that are partially or totally underground, so as to be hidden from view during normal use, to be brought to street level to allow emptying and/or replacement of the containers.

An example of such a solution is given by document EP A 0799152 in which an underground carousel carries a plurality of containers for the collection of waste that are selectively positioned by the carousel beneath a column, emerging from street level and carrying a waste collection opening.

Another example of these types of waste collection apparatuses is illustrated in document EP A 1415937, which describes an underground collection unit comprising a plurality of containers and a delivery unit emerging from the ground and communicating with the underground unit. In this case, the separation of waste is carried out by the delivery unit emerging from the ground.

These solutions have, however, been met with muted approval, due to their high cost and their complexity of construction and management.

In order to limit the environmental impact of collection centers while at the same time ensuring a high collection capacity, patent IT 1374665 proposes to make them inside a building that integrates harmoniously into a residential area, at the same time ensuring the desired collection capacity. Such a building internally completely conceals from view numerous wheeler containers and possible skips suitable for receiving large amounts of waste, comparable to those that can be managed through common ecological waste depots, and easily removed once filling is complete to be replaced with empty containers and transported to recycling plants or other waste treatment centers.

WO 2012/015664 A discloses a device for the separate collection of waste, including: a containment structure, internally defining a compartment for housing containers, the compartment being delimited by: head walls, side walls, a user-interface wall and a top wall; wherein said containment structure comprises: at least one user interface, wherein the user interface comprises a cover plate and has at least one delivery port closed by an access door, and at least one identification unit configured to enable opening of the access door upon identification of a user; and wherein at least one of the side walls comprises at least one openable portion movably constrained with respect to one of the terminal frames to enable the introduction and extraction of the containers from said compartment.

US5118037 discloses a waste collection device, including: a containment structure, internally defining a compartment for housing containers, the compartment being delimited by: head walls, side walls and a top wall, wherein said containment structure is formed by: terminal frames extending according to respective planes parallel to each other, side frames arranged at the upper part of the side walls and having each respective opposite ends joined to the terminal frames, at least one user interface applied to one of the side frames, and covering panels removably engaged with respect to the terminal frames for defining said head walls, side walls and top wall; wherein the user interface having at least one delivery port closed by an access door, and wherein at least one of the covering panels comprises at least one openable portion movably constrained with respect to one of the terminal frames to enable the introduction and extraction of the containers from said compartment.

Additional examples of rubbish collecting devices are disclosed in CN 104 495 139 B and US 1 281 587 A.

The Applicant has, however, found that the state of the art is not yet capable of satisfying the current requirements linked to the management of separate collection, especially where the amounts of waste expected for every fraction - e.g. glass, paper and cardboard, plastic, organic, unsorted, etc. - can vary considerably over time. A typical example in which this circumstance can occur over a short period is typically found in connection with the launch of separate collection in a given urban area, which leads to a significant reduction over 6-12 months in the amount of unsorted waste with a corresponding increase in other fractions of waste. In the next period between 12 and 36 months, the collection of new fractions of waste, such as small electric/electronic equipment (WEEE), various types of plastics comprising valuable polymers, used batteries, bulks, etc., results in the need for further containers at a roadside collection bank. In some cases, seasonal fluctuations - in particular in tourist areas - or the occurrence of particular events can temporarily alter the amount of waste collected for every fraction.

The purpose of the present invention is to improve the state of the art through a device for separate collection of waste that offers easy adaptability in terms of increasing the quantity and/or the capacity of containers dedicated to each fraction of waste.

It is also wished to propose a device that is easy to adapt to the urban area of installation in order to allow easy access to the single containers for the purposes of periodic emptying and/or replacement by trained staff.

A further purpose is for said device to be easily adapted to identify different types of user, each enabled to deliver certain fractions of waste, possibly at certain times of day.

Another purpose is for such a device to be able to be easily equipped with different types of user interfaces, each suitable for delivering a certain fraction of waste.

More in particular, the object of the present invention is a device for separate collection of waste, comprising: a containment structure, internally defining a compartment for housing containers delimited between: head walls mutually spaced along a longitudinal development direction of the containment structure, side walls extending parallel to the longitudinal development direction, user-interface walls rising from the side walls, and at least one top wall extending from one to the other of the user-interface walls. The containment structure is preferably formed by at least one structural module comprising: terminal frames extending according to respective planes parallel to each other, side frames arranged at the user-interface walls and having each respective opposite ends joined to the terminal frames, at least one user interface applied on one of the side frames, and covering panels removably engaged with respect to the terminal frames to define said head walls, side walls and top wall. The user interface comprises a cover plate fixed to the side frame and having at least one delivery port closed by an access door, and at least one identification unit configured to enable opening of the access door upon identification of a user. At least one of the covering panels comprises at least one openable portion movably constrained with respect to one of the terminal frames to enable the introduction and extraction of the containers from said compartment. The invention can also comprise one or more of the following preferred features.

Preferably, the containment structure comprises two or more of said structural modules consecutively arranged along said longitudinal development direction.

Preferably, the structural modules are removably connected to each other in correspondence with the respective terminal frames. Preferably, said compartment has a continuous development along two or more structural modules.

Preferably, every structural module has at least two user interfaces arranged each in correspondence with one of said side frames. Preferably, every structural module has two user-interface walls, each rising from one of the side walls.

Preferably, the user-interface walls rise obliquely according to mutually convergent development each from one of the side walls.

Preferably, said structural module also comprises reinforcing beams parallel to the longitudinal development direction and each having opposite ends joined to the terminal frames.

Preferably, said openable portion is directly constrained to the respective terminal frame, for example to one of the uprights. Preferably, said openable portion is hinged to the respective terminal frame, for example through a hinge fixed to the terminal frame itself. Preferably, said openable portion is arranged on at least one of the covering panels defining at least one of the head walls.

Preferably, said openable portion is arranged on at least one of the covering panels defining at least one of the side walls.

Preferably, each of the terminal frames develops according to a closed line.

Preferably, each of the terminal frames comprises a base tie rod extending horizontally on the ground.

Preferably, the covering panels defining the top wall have longitudinal edges overlapping upper beams of the side frames.

Preferably, every terminal frame comprises metallic section bars joined together at respective ends.

Preferably, every side frame comprises metallic section bars joined together at respective ends.

Preferably, the structural module also comprises at least one support bracket fixed to the side frame and extending in the compartment parallel to the longitudinal development direction.

Preferably, said support bracket is laterally brought up to one of the side frames, in a positioned spaced from a longitudinal centre plane of the containment structure.

Preferably, the support bracket supports a feeding group and/or a filling sensor of the container and/or other accessory components operatively connected with the user interface.

Further characteristics and advantages of the present invention will become clearer from the indicative, and therefore not limiting, description of a preferred but not exclusive embodiment of a device for separate collection of waste, as illustrated in the attached drawings, in which:

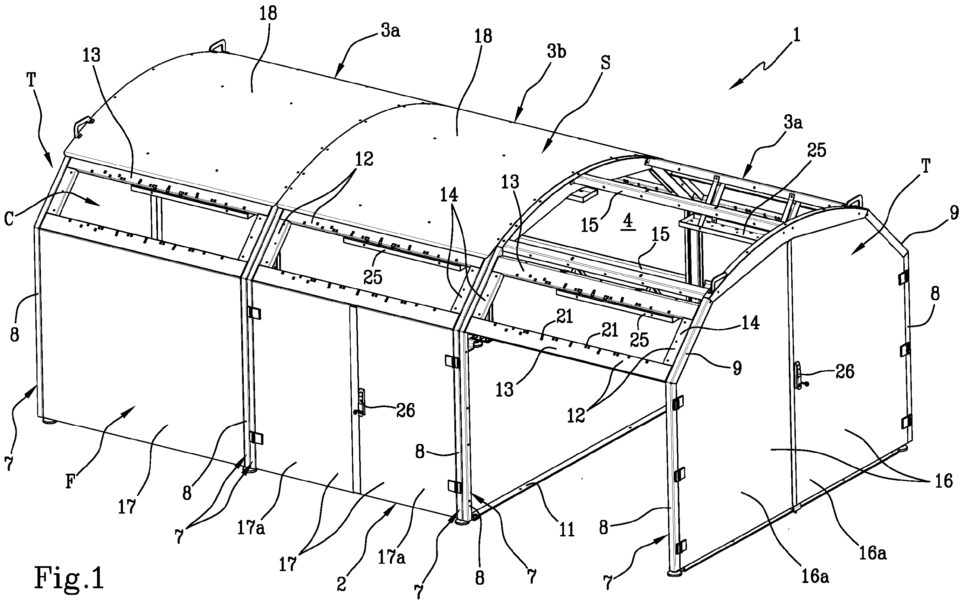

figure 1 shows a partially interrupted perspective view of an embodiment of a device according to the present invention;
figure 2 shows a plan view of the device of figure 1;

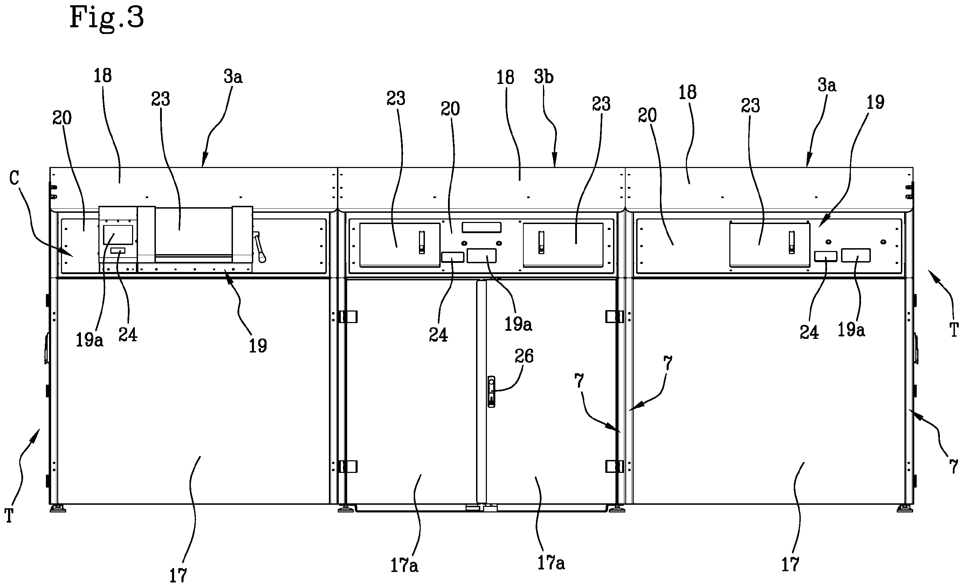

figure 3 shows the device of figure 1 in a side view;

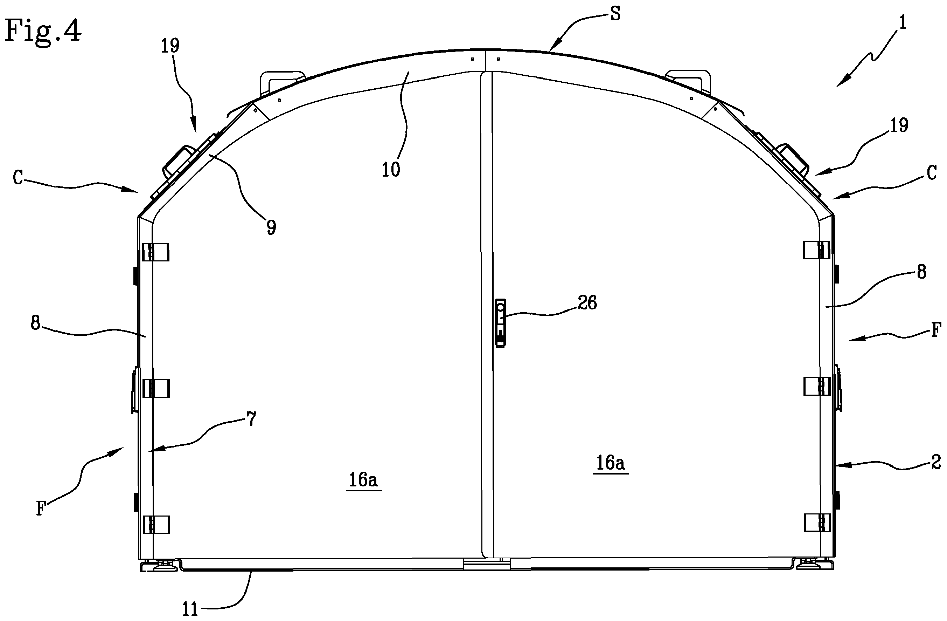

figure 4 shows the device of figure 1 in a front view;

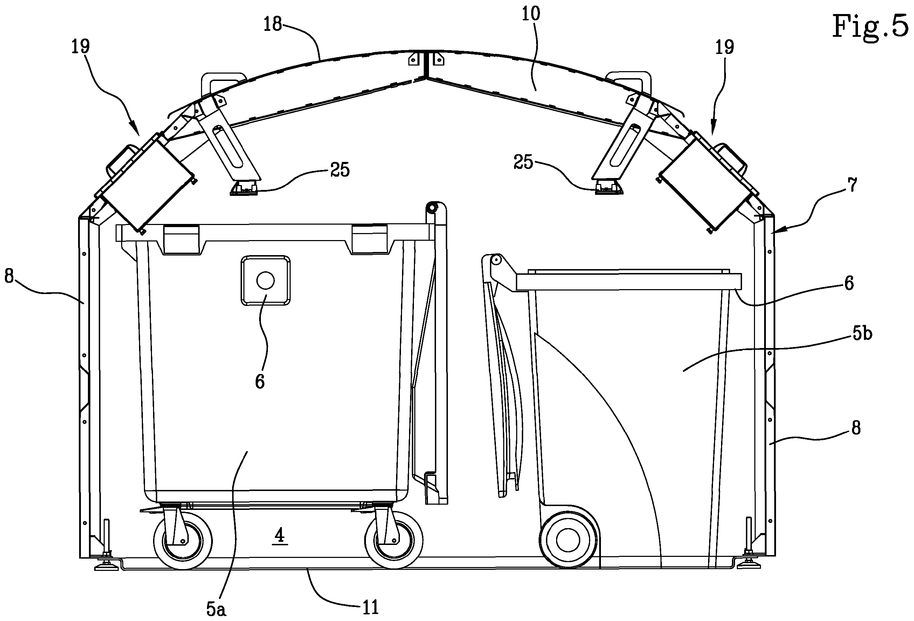

figure 5 is a section carried out according to the line V-V of figure 2;
figure 6 shows a perspective view of the device in a second configuration;
figure 7 shows a perspective view of the device in a third configuration.

With reference to the attached figures, reference numeral 1 wholly indicates a device for separate collection of waste according to the present invention.

The device 1 comprises a containment structure 2, made up of one or more structural modules 3a, 3b consecutively coupled, and internally defining a compartment 4, preferably single and normally closed with respect to the outside, for housing at least one, preferably two or more containers 5a, 5b suitable for separate collection of waste. Each container 5a, 5b, intended for the delivery of a specific fraction of waste (for example: glass, paper and cardboard, plastic, organic, unsorted, etc.), can be made in the form of a basin that is open on top, preferably provided with wheels to facilitate the movement thereof. Each container 5a, 5b is also preferably provided with grip elements 6 suitable for allowing the use thereof by a lifting and automated emptying apparatus, usually installed on a waste collection vehicle.

The compartment 4 inside the containment structure 2 is horizontally delimited between two head walls T mutually spaced along a longitudinal development direction L of the containment structure 2, and two side walls F extending parallel to the longitudinal development direction L, for the entire length of the containment structure 2. The compartment 4 is also vertically delimited between the ground, or rather the road surface on which the entire device 1 rests, and a top wall S extending between two user-interface walls C that each rise from one of the side walls F, preferably according to a mutually convergent oblique development.

Each structural module 3a, 3b comprises at least two terminal frames 7 extending according to respective planes, preferably vertical, parallel to one another, each at one of the opposite longitudinal ends of the respective structural module 3a, 3b. Every terminal frame 7 comprises metallic section bars joined together, for example through welding, at respective ends. Preferably, each of the terminal frames 7 develops according to a closed line. More in particular, there can be two vertical uprights 8 and two oblique elements 9 that outline the terminal frame 7 respectively close to the side walls F and the user-interface walls C, one or more upper segments 10 extending according to a substantially arched or horizontal development at the top wall S, and a base tie rod 11 extending horizontally on the ground, between the lower ends of the uprights 8.

Each structural module 3a, 3b also comprises a pair of side frames 12 arranged at the user-interface walls C and having each respective opposite ends joined to the terminal frames 7. In the illustrated example, every side frame 12 comprises metallic section bars, for example a pair of beams 13 parallel to the longitudinal development direction L, and a possible pair of terminal section bars 14, joined together according to a rectangular configuration at respective ends. The terminal section bars 14 are also joined to the oblique elements 9 of the terminal frames 7, preferably removably, for example through threaded elements.

It is also possible to provide reinforcing beams 15 parallel to the longitudinal development direction L and each having opposite ends joined to the terminal frames 7, for example in a position over the top of the side frames 12.

Every structural module 3a, 3b also comprises covering panels 16, 17, 18, for example made from sheet metal, removably engaged with respect to the terminal frames 7. More in particular, it is possible to identify first, second and third covering panels respectively numbered with 16, 17 and 18 that combine to respectively define the head walls T, the side walls F and the top wall S of the containment structure 2. Each of the first covering panels 16, which define the head walls T, has respective perimeter edges removably fixed along the section bars of the respective terminal frame 7.

The second covering panels 17, which define the side walls F, are each removable fixed between the uprights 8 of the terminal frames 7 and one of the beams 13 of the respective side frame 12.

The third covering panel(s) 18, which define the top wall S, are in turn removably fixed on the terminal frames 7 and/or to the reinforcing beams 15, and preferably have longitudinal edges overlapping the upperly arranged beams 13 of the side frames 12.

In order to facilitate assembly and increase rigidity, the covering panels 16, 17, 18 that define the side walls F and/or other walls of the containment structure 2, can have folded edges.

At least one of the side frames 12 has at least one user interface 19 applied on it, through which the single users can interact with the device 1 for the purposes of depositing waste. Preferably, every structural module 3a, 3b is equipped with at least two user interfaces 19, one for each of the side frames 12.

Every user interface 19 comprises a cover plate 20 fixed to the respective side frame 12, preferably removably through threaded elements passing through coupling holes 21 if necessary arranged on the beams 13 and/or on the terminal section bars 14. In order to prepare the side frame 12 for the installation of user interfaces 19 of a different type, it is possible to provide two or more series of coupling holes 21, where the holes of every series are spaced apart according to a predetermined distance between centers, different for every series of holes.

The cover plate 20 has at least one delivery port 22 closed by an access door 23. In the illustrated example different user interfaces 19 are installed, respectively provided with a single delivery port 22, or two delivery ports equipped with respective access doors 23. Every access door 23 can be made in the form of a hinged or sliding leaf, or in the form of a rotating circular cap to limit the volume of the material able to be inserted in every deposit.

In a *per se* known way, every delivery port 22 is equipped with an electric lock (not visible in the drawings) or other locking device that keeps the access door 23 normally closed.

Every user interface 19 is also associated with at least one identification unit 24 that controls the actuation of the locking device to enable the opening of the access door 23, upon identification of a user through the recognition of a code assigned to it. The code can for example be stored on a badge or other memory unit in the possession of the user, or directly entered through a keypad or other entry device. Preferably, at least one support bracket 25 is installed inside every structural module 3a, 3b, extending in the compartment 4 parallel to the longitudinal development direction L. In the illustrated example two support brackets 25 are provided, preferably each fixed to the respective side frame 12 and/or to the reinforcing beam 15. Every support bracket 25 is laterally brought up to one of the side frames 12, in a position spaced from a longitudinal centre plane of the containment structure 2, so as not to obstruct access to the containment compartment 4 along the longitudinal centre plane, and is able to support an electric power supply unit and/or other components (not illustrated) operatively connected with the respective user interface 19. For example, a filling sensor of the underlying container 5a, 5b can be installed on the support bracket 25, coupled with a signalling and/or data transmission unit to indicate the imminent need to empty it. Additionally or alternatively, it is possible to provide sensors for detecting possible fires, disinfectant and deodorizing spray systems and video surveillance systems. The electrical power supply group can possibly be configured to store energy supplied by a photovoltaic system.

To enable the introduction and extraction of the containers 5a, 5b from the compartment 4 for the purposes of emptying and/or replacement, and/or for other maintenance interventions of the device, at least one of the covering panels 16, 17, 18 comprises at least one openable portion 16a, 17a that is hinged or sliding with respect to one of the terminal frames 7.

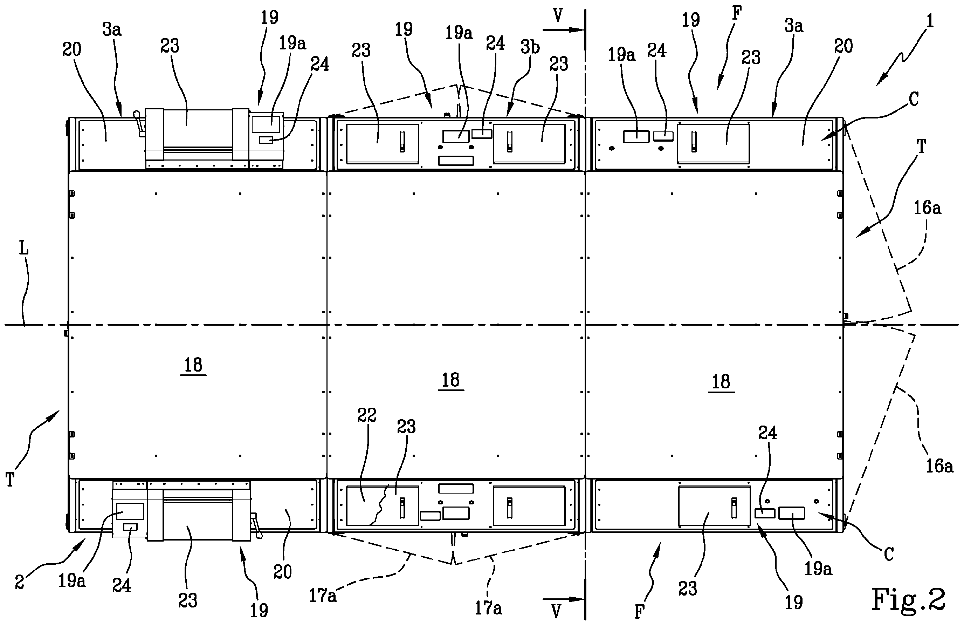

More in particular, the openable portion 16a, 17a can for example be arranged on one or more of the first covering panels 16, which define at least one of the head walls T, and/or on one or more of the second covering panels 17 that define at least one of the side walls F. More in particular, as can be seen better in figure 2, at least one of these covering panels 16, 17, can comprise two openable portions 16a, 17a, each movably constrained to one of the uprights 8 of the respective terminal frame 7. The openable portions 16a, 17a are kept normally in closed condition through a lock 26, able to be unlocked by authorised personnel in possession of a suitable key. The opening of the openable portions 16a, 17a frees the access to the inside of the compartment 4, allowing easy extraction/introduction of the containers 5a, 5b.

The present invention achieves and extraordinary adaptability of the collection device to changing requirements, which may change both in relation to the number of fractions of waste, and in relation to the expected quantity of waste for every fraction.

In particular, the number of structural modules 3a, 3b lends itself to being easily increased or decreased to adapt the containment structure 2 to receiving a number of fractions and/or amount of waste that can change over time, for example for seasonal fluctuations in tourist areas, or for the evolution of user awareness and their consequent behaviour in relation to separation of waste.

In the embodiment depicted, the device 1 has three structural modules, one central 3b and two terminal 3a, consecutively arranged along the longitudinal development direction L and removably joined together, for example through threaded elements at the respective terminal frames 7 brought towards one another.

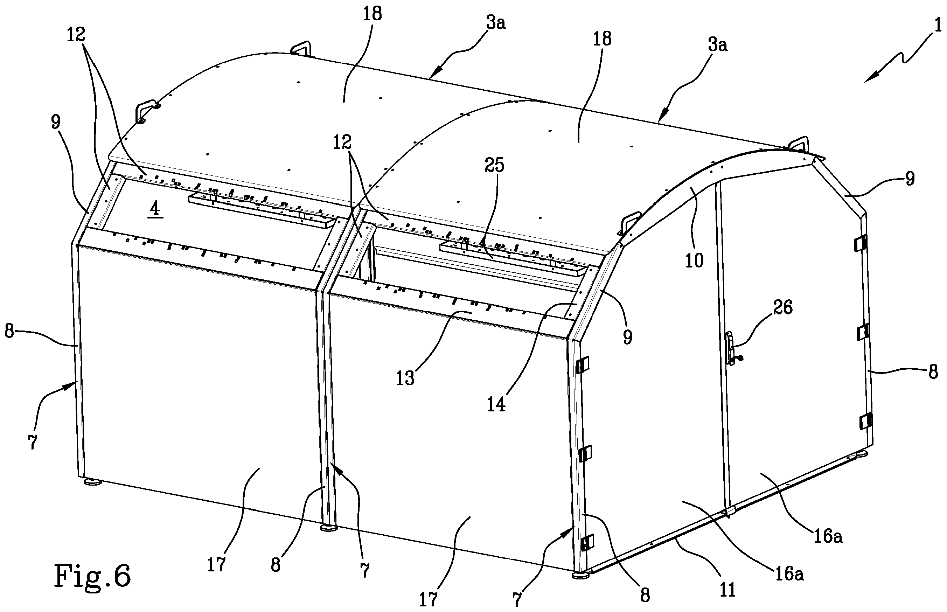

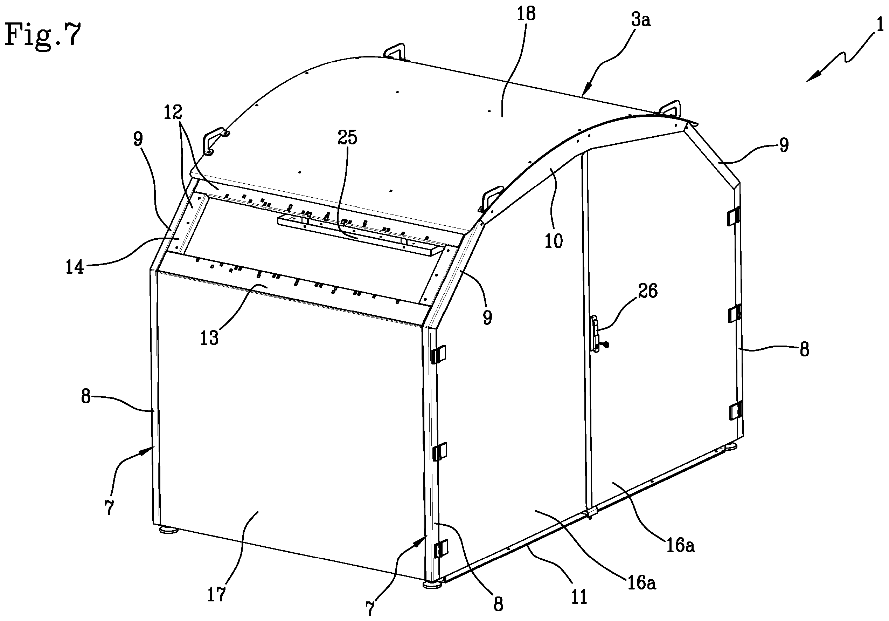

The terminal structural modules 3a are equipped with the respective first covering panels 16 on the head walls T, whereas the central structural module 3b has the second and third covering panels 17, 18 only at the side walls F and the top wall S, so that the compartment 4 inside the containment structure 2 is substantially free from interruptions. If necessary, it is possible to provide two or more central structural modules 3b, or only the terminal structural modules 3a in the absence of central modules, as in figure 6. Alternatively, the containment structure 2 can comprise a single structural module 3a, 3b, as in figure 7.

Each structural module 3a, 3b is also suitable for being equipped with a different number of containers 5a, 5b, of different dimensions. For example, if it is wished to use standardised containers 5a, 5b, it is possible for each structural module 3a, 3b to receive two containers 5a, having capacity of 1000 litres each, or four 360-litre containers 5b, or a combination of one 1000-litre container 5a, and two 360-litre containers 5b. It is thus possible to respectively collect two, three or four distinct fractions of waste in each structural module 3a, 3b. The type of fractions of waste can easily be determined by providing delivery ports 22 and respective access doors 23 of appropriate shapes and sizes. The covering panels 16, 17, 18, easily interchangeable, have large surfaces suitable for displaying clear indications to direct the user on the correct use of the single user interface 19 and of the device 1 as a whole. Further indications can be conveyed through suitable displays 19a, associated with each of the user interfaces 19.

The device in object therefore proves capable of promoting progressive adaptation to the collection requirements, aimed at increasing the amount and the quality of the waste delivered in sorted form by users. The device also lends itself to being inserted in an urban setting as a meeting and information point for citizens, and allows many people to use the service simultaneously to deposit their waste in an organised and precise manner.

## Claims

1. A device for the separate collection of waste, including:
a containment structure (2), internally defining a compartment (4) for housing containers (5a, 5b), the compartment (4) being delimited by:
head walls (T) mutually spaced along a longitudinal development direction (L) of the containment structure (2),
side walls (F) extending parallel to the longitudinal development direction (L),
user-interface walls (C) rising from the side walls (F), and
at least one top wall (S) extending from one to the other of the user-interface walls (C);
wherein said containment structure (2) is formed by at least one structural module (3a, 3b) comprising:
terminal frames (7) extending according to respective planes parallel to each other,
side frames (12) arranged at the user interface walls (C) and having each respective opposite ends joined to the terminal frames (7),
at least one user interface (19) applied to one of the side frames (12), and
covering panels (16, 17, 18) removably engaged with respect to the terminal frames (7) for defining said head walls (T), side walls (F) and top wall (S);
wherein the user interface (19) comprises a cover plate (20) fixed to the respective side frame (12) and having at least one delivery port (22) closed by an access door (23), and at least one identification unit (24) configured to enable opening of the access door (23) upon identification of a user; and
wherein at least one of the covering panels (16, 17, 18) comprises at least one openable portion (16a, 17a) movably constrained with respect to one of the terminal frames (7) to enable the introduction and extraction of the containers (5a, 5b) from said compartment (4).

2. A device according to claim 1, wherein the containment structure (2) comprises two or more of said structural modules (3a, 3b) consecutively arranged along said longitudinal development direction (L).

3. A device according to claim 1 or 2, wherein the structural modules (3a, 3b) are removably connected to each other in correspondence with the respective terminal frames (7).

4. A device according to one or more of the preceding claims, wherein each structural module (3a, 3b) has at least two user interfaces (19) arranged each in correspondence with one of said side frames (12).

5. A device according to one or more of the preceding claims, wherein the user interface walls (C) rise obliquely from the side walls (F) according to mutually convergent development.

6. A device according to one or more of the preceding claims, wherein said openable portion (16a) is arranged on at least one of the covering panels (16) defining at least one of the head walls (T).

7. A device according to one or more of the preceding claims, wherein said openable portion (17a) is arranged on at least one of the covering panels (17) defining at least one of the side walls (F).

8. A device according to one or more of the preceding claims, wherein each of the terminal frames (7) develops according to a closed line.

9. A device according to one or more of the preceding claims, wherein the structural module (3a, 3b) further comprises at least one support bracket (25) fixed to the side frame (12) and extending in the compartment (4) parallel to the longitudinal development direction (L).

10. A device according to claim 9, wherein said support bracket (25) is laterally close to one of the side frames, at a position spaced from a longitudinal center plane of the containment structure (2).

11. A device according to one or more of the preceding claims, wherein said compartment (4) has a continuous development along two or more structural modules (3a, 3b).

12. A device according to one or more of the preceding claims, wherein said structural module (3a, 3b) also comprises reinforcing beams (15) parallel to the longitudinal development direction (L) and each having opposite ends joined to the terminal frames (7).

13. A device according to one or more of the preceding claims, wherein each of the terminal frames (7) comprises a base tie rod (11) extending horizontally on the ground.

14. A device according to one or more of the preceding claims, wherein the covering panels (18) defining the top wall (S) have longitudinal edges overlapping upper beams of the side frames (12).

15. A device according to one or more of claims 9 to 14, wherein the support bracket (25) supports accessory components operatively connected with the user interface (C).

## Patentansprüche

1. Vorrichtung für das getrennte Sammeln von Abfall, umfassend:
eine Umschließungsstruktur (2), die im Inneren einen Raum (4) zum Unterbringen von Tonnen (5a, 5b) definiert, wobei der Raum (4) durch Folgendes begrenzt wird:
Stirnwände (T), die sich entlang einer Längsverlaufsrichtung (L) der Umschließungsstruktur (2) zueinander im Abstand befinden,
Seitenwände (F), die parallel zu der Längsverlaufsrichtung (L) verlaufen,
Benutzerschnittstellenwände (C), die sich von den Seitenwänden (F) erheben, und
mindestens eine obere Wand (S), die von einer zu der anderen Benutzerschnittstellenwand (C) verläuft;
wobei die genannte Umschließungsstruktur (2) aus mindestens einem strukturellen Modul (3a, 3b) gebildet wird, das Folgendes umfasst:
Anschlussrahmen (7), die gemäß entsprechender Ebenen parallel zueinander verlaufen,
Seitenrahmen (12), die an den Benutzerschnittstellenwänden (C) angeordnet sind und jeweils entsprechende, mit den Anschlussrahmen (7) zusammengefügte, gegenüberliegende Enden aufweisen,
mindestens eine Benutzerschnittstelle (19), die an einem der Seitenrahmen (12) angebracht ist, und
Abdeckplatten (16, 17, 18), die sich im Verhältnis zu den Anschlussrahmen (7) lösbar im Eingriff befinden, um die genannten Stirnwände (T), Seitenwände (F) und obere Wand (S) zu definieren;
wobei die Benutzerschnittstelle (19) eine an dem Seitenrahmen (12) befestigte Abdeckplatte (20) umfasst, die mindestens eine von einer Zugangsklappe (23) verschlossene Eingabeluke (22) umfasst, und mindestens ein Identifikationsgerät (24), das darauf ausgelegt ist, das Öffnen der Zugangsklappe (23) nach dem Identifizieren eines Benutzers zu aktivieren; und
wobei mindestens eine der Abdeckplatten (16, 17, 18) mindestens einen zu öffnenden Abschnitt (16a, 17a) umfasst, der im Verhältnis zu einem der Anschlussrahmen (7) beweglich befestigt ist, um das Unterbringen und Entnehmen der Tonnen (5a, 5b) aus dem genannten Raum (4) zu ermöglichen.

2. Vorrichtung nach Anspruch 1, bei der die Umschließungsstruktur (2) zwei oder mehr der genannten strukturellen Module (3a, 3b) nacheinander entlang der genannten Längsverlaufsrichtung (L) angeordnet umfasst.

3. Vorrichtung nach Anspruch 1 oder 2, bei der die strukturellen Module (3a, 3b) miteinander an den jeweiligen Anschlussrahmen (7) lösbar verbunden sind.

4. Vorrichtung nach einem oder mehreren der vorangegangenen Ansprüche, bei der jedes strukturelle Modul (3a, 3b) mindestens zwei Benutzerschnittstellen (19) aufweist, die jeweils an einem der genannten Seitenrahmen (12) angeordnet sind.

5. Vorrichtung nach einem oder mehreren der vorangegangenen Ansprüche, bei der die Benutzerschnittstellenwände (C) sich gemäß eines zueinander konvergenten Verlaufs schräg von den Seitenwänden (F) erheben.

6. Vorrichtung nach einem oder mehreren der vorangegangenen Ansprüche, bei der der genannte zu öffnende Abschnitt (16a) an mindestens einer der Abdeckplatten (16) angeordnet ist, die mindestens eine der Stirnwände (T) definiert.

7. Vorrichtung nach einem oder mehreren der vorangegangenen Ansprüche, bei der der genannte zu öffnende Abschnitt (17a) an mindestens einer der Abdeckplatten (17) angeordnet ist, die mindestens eine der Seitenwände (T) definiert.

8. Vorrichtung nach einem oder mehreren der vorangegangenen Ansprüche, bei der jeder der Anschlussrahmen (7) gemäß einer geschlossenen Linie verläuft.

9. Vorrichtung nach einem oder mehreren der vorangegangenen Ansprüche, bei der das strukturelle Modul (3a, 3b) außerdem mindestens einen an dem Seitenrahmen (12) befestigten Haltebügel (25) umfasst, der in dem Raum (4) parallel zu der Längsverlaufsrichtung (L) verläuft.

10. Vorrichtung nach Anspruch 9, bei der der genannte Haltebügel (25) sich seitlich in der Nähe eines der Seitenrahmen in einer von einer Längsmittelebene der Umschließungsstruktur (2) im Abstand befindlichen Position befindet.

11. Vorrichtung nach einem oder mehreren der vorangegangenen Abschnitte, bei der der genannte Raum (4) einen kontinuierlichen Verlauf entlang von zwei oder mehreren strukturellen Modulen (3a, 3b) aufweist.

12. Vorrichtung nach einem oder mehreren der vorangegangenen Ansprüche, bei der das genannte strukturelle Modul (3a, 3b) außerdem Verstärkungsträger (15) parallel zu der Längsverlaufsrichtung (L) umfasst, von denen jeder mit den Anschlussrahmen (7) zusammengefügte gegenüberliegende Enden aufweist.

13. Vorrichtung nach einem oder mehreren der vorangegangenen Ansprüche, bei der jeder der Anschlussrahmen (7) einen horizontal zum Boden verlaufenden unteren Zuganker (11) umfasst.

14. Vorrichtung nach einem oder mehreren der vorangegangenen Ansprüche, bei der die die obere Wand (S) definierenden Abdeckplatten (18) obere Balken der Seitenrahmen (12) überlagernde Längskanten aufweisen.

15. Vorrichtung nach einem oder mehreren der Ansprüche 9 bis 14, bei der der Haltebügel (25) operativ mit der Benutzerschnittstelle (C) verbundene Zusatzkomponenten trägt.

## Revendications

1. Dispositif de collecte séparée de déchets, comprenant :
une structure de confinement (2), définissant intérieurement un compartiment (4) pour loger des récipients (5a, 5b), le compartiment (4) étant délimité par :
des murs d'extrémité (T) espacés mutuellement le long d'une direction de développement longitudinale (L) de la structure de confinement (2),
des murs latéraux (F) s'étendant de façon parallèle à la direction de développement longitudinale (L),
des murs d'interface utilisateur (C) s'élevant des murs latéraux (F), et
au moins un mur supérieur (S) s'étendant d'un à l'autre des murs d'interface utilisateur (C) ;
dans lequel ladite structure de confinement (2) est formée par au moins un module structurel (3a, 3b) comprenant :
des cadres terminaux (7) s'étendant selon des plans respectifs parallèles l'un à l'autre,
des cadres latéraux (12) agencés au niveau des murs d'interface utilisateur (C) et ayant chacun des extrémités opposées respectives unies aux cadres terminaux (7),
au moins une interface utilisateur (19) appliquée à un des cadres latéraux (12), et
des panneaux de revêtement (16, 17, 18) engagés de manière amovible par rapport aux cadres terminaux (7) pour définir lesdits murs d'extrémité (T), lesdits murs latéraux (F) et ledit mur supérieur (S)
dans lequel l'interface utilisateur (19) comprend une plaque de couverture (20) fixée au cadre latéral (12) et ayant au moins un orifice de distribution (22) fermé par une porte d'accès (23), et au moins une unité d'identification (24) configurée pour permettre l'ouverture de la porte d'accès (23) lors de l'identification d'un utilisateur ; et
dans lequel au moins l'un des panneaux de revêtement (16, 17, 18) comprend au moins une partie qui peut être ouverte (16a, 17a) liée de manière mobile par rapport à un des cadres terminaux (7) pour permettre l'introduction et l'extraction des récipients (5a, 5b) dudit compartiment (4).

2. Dispositif selon la revendication 1, dans lequel la structure de confinement (2) comprend deux ou plusieurs desdits modules structurels (3a, 3b) agencés consécutivement le long de ladite direction de développement longitudinale (L).

3. Dispositif selon la revendication 1 ou 2, dans lequel les modules structurels (3a, 3b) sont reliés de manière amovible l'un à l'autre en correspondance avec les cadres terminaux respectifs (7) .

4. Dispositif selon l'une ou plusieurs des revendications précédentes, dans lequel chaque module structurel (3a, 3b) comporte au moins deux interfaces utilisateur (19) agencées chacune en correspondance avec l'un desdits cadres latéraux (12).

5. Dispositif selon l'une ou plusieurs des revendications précédentes, dans lequel les murs d'interface utilisateur (C) s'élèvent de manière oblique des murs latéraux (F) selon le développement mutuellement convergent.

6. Dispositif selon l'une ou plusieurs des revendications précédentes, dans lequel ladite partie qui peut être ouverte (16a) est agencée sur au moins l'un des panneaux de revêtement (16) définissant au moins l'un des murs d'extrémité (T).

7. Dispositif selon l'une ou plusieurs des revendications précédentes, dans lequel ladite partie qui peut être ouverte (17a) est agencée sur au moins l'un des panneaux de revêtement (17) définissant au moins l'un des murs latéraux (F).

8. Dispositif selon l'une ou plusieurs des revendications précédentes, dans lequel chacun des cadres terminaux (7) se développe selon une ligne fermée.

9. Dispositif selon l'une ou plusieurs des revendications précédentes, dans lequel le module structurel (3a, 3b) comprend en outre au moins un palier support (25) fixé au cadre latéral (12) et s'étendant dans le compartiment (4) parallèle à la direction de développement longitudinale (L).

10. Dispositif selon la revendication 9, dans lequel ledit palier support (25) est fermé latéralement sur l'un des cadres latéraux, au niveau d'une position espacée d'un plan central longitudinal de la structure de confinement (2).

11. Dispositif selon l'une ou plusieurs des revendications précédentes, dans lequel ledit compartiment (4) a un développement continu le long de deux ou plusieurs modules structurels (3a, 3b).

12. Dispositif selon l'une ou plusieurs des revendications précédentes, dans lequel ledit module structurel (3a, 3b) comprend également des traverses de renforcement (15) parallèles à la direction de développement longitudinale (L) et ayant chacune des extrémités opposées unies aux cadres terminaux (7).

13. Dispositif selon l'une ou plusieurs des revendications précédentes, dans lequel chacun des cadres terminaux (7) comprend un tirant de base (11) s'étendant horizontalement sur le terrain.

14. Dispositif selon l'une ou plusieurs des revendications précédentes, dans lequel les panneaux de revêtement (18) définissant le mur supérieur (S) ont des bords longitudinaux chevauchant des traverses supérieures des cadres latéraux (12).

15. Dispositif selon l'une ou plusieurs des revendications 9 à 14, dans lequel le palier support (25) supporte des éléments accessoires reliés fonctionnellement à l'interface utilisateur (C).
